Europäisches Patentamt

European Patent Office

Office européen des brevets

(19)

(11) EP 1 514 840 A1

(12) EUROPEAN PATENT APPLICATION
published in accordance with Art. 158(3) EPC

(43) Date of publication:
16.03.2005 Bulletin 2005/11

(51) Int Cl.⁷: **C01B 6/06**, C01B 3/04

(21) Application number: 03760872.6

(86) International application number:
PCT/JP2003/007670

(22) Date of filing: 17.06.2003

(87) International publication number:
WO 2004/000726 (31.12.2003 Gazette 2004/01)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 19.06.2002 JP 2002178274

(71) Applicant: Sony Corporation
Tokyo 141-0001 (JP)

(72) Inventors:
• MORIOKA, Hiroyuki c/o SONY CORPORATION
Shinagawa-ku, Tokyo 141-0001 (JP)
• YAMADA, Atsuo2c/o SONY CORPORATION
Shinagawa-ku, Tokyo 141-0001 (JP)
• CHUNG, Saicheong c/o SONY CORPORATION
Shinagawa-ku, Tokyo 141-0001 (JP)

(74) Representative: Körber, Martin, Dipl.-Phys.
Mitscherlich & Partner
Patentanwälte
Sonnenstrasse 33
80331 München (DE)

(54) **HYDROGEN OCCLUDING MATERIAL AND METHOD FOR USE THEREOF**

(57)     The present invention provides a hydrogen occluding material which occludes much more hydrogen than conventional alkali metal hydride (such as $NaAlH_4$) through reversible reactions and yet permits hydrogen occlusion and release in one stage at a lower operating temperature, and a method for using said hydrogen occluding material.

A hydrogen occluding material which comprises an aluminum hydride represented by the formula (1) below.

$$AlH_x \qquad (1)$$

(where $0 \le x \le 3$.)

A method for using a hydrogen occluding material, said method comprising hydrogenating and/or dehydrogenating at 200°C or below a hydrogen occluding material composed of an aluminum hydride represented by the formula (1) above.

F I G. 1

**Description**

Technical Field

The present invention relates to a hydrogen occluding material and a method for using it.

Background Art

Since the Industrial Revolution, fossil fuels such as gasoline and light oil have come into general use as the power source for automobiles, electric power generation, and others in many branches of industry. Use of fossil fuels has greatly contributed to the development of industry which in turn has improved the living standard of human being.

On the other side of the coin, the earth is facing a serious environmental disruption. Moreover, there is a widespread skepticism about the long-term stable supply of fossil fuels.

Under these circumstances, hydrogen fuel is attracting attention as a clean energy source that will replace fossil fuels. This is because hydrogen fuel emits nothing but water after combustion.

Considerable attention has been devoted to the development of a new material capable of efficient storage and evolution of hydrogen and easy transportation. Hydrogen is usually stored in the form of compressed gas, liquefied gas, or occluded gas in a special alloy. Storage in the form of compressed or liquefied gas poses a problem with heavy containers inconvenient for transportation. Storage in the form of occluded gas is not yet commercialized on account of high price and heavy weight.

It has recently been reported that $NaAlH_4$ undergoes reversible hydrogenation and dehydrogenation at about 150°C in the presence of a catalyst metal such as Ti and Zr, as shown below.
(Journal of Alloys and Compounds, 253-254 (1997), 1-9; and Published Japanese Translation of PCT international publication for patent application No. Hei-11-510133)

$$3NaAlH_4 \rightleftarrows Na_3AlH_6 + 2Al + 3H_2 \qquad (1)$$

$$Na_3AlH_6 \rightleftarrows 3NaH + Al + 3/2H_2 \qquad (2)$$

$$NaAlH_4 \rightleftarrows NaH + Al + 3/2H_2 \qquad (3)$$

In other words, it is known that $NaAlH_4$ (which is a solid) undergoes hydrogenation and dehydrogenation in two stages. First, thermal dissociation takes place to decompose $NaAlH_4$ into $Na_3AlH_6$ and metallic aluminum, thereby releasing hydrogen (in stage (1) shown above).

Then, $Na_3AlH_6$ decomposes further into NaH and Al, thereby releasing hydrogen, at a higher temperature (in stage (2) shown above). The entire steps of hydrogenation and dehydrogenation for $NaAlH_4$ are represented by equation (3) above. Dissociation of NaH into Na and H takes place at a considerably high temperature, say, 650°C or above. Incidentally, the amount of hydrogen evolved is about 3.8 wt% of $NaAlH_4$ in stage (1) and about 1.9 wt% of $NaAlH_4$ in stage (2). The reaction proceeds rightward as the temperature increases and leftward as the pressure of hydrogen increases.

Alanate ($XAlH_4$, where X = Na, Li, etc.) typified by $NaAlH_4$ mentioned above is going to find use as a new hydrogen occluding material differing in the mode of reaction from conventional hydrogen occluding alloys. It does not need complex initial activating treatment. It can be made into a hydrogen occluding material easily by milder reactions than alloys. It is lighter in weight than conventional alloys. Because of these advantages, this material is under intensive study for the development of new hydrogen occluding materials. Now, "the method for hydrogen occlusion by catalytic reactions" is opening up a new area.

However, $NaAlH_4$ still has room for improvement. It is limited in the amount of hydrogen released (which is theoretically 5.6 wt%) even though it undergoes the two stages completely. It is required to have a larger capacity for hydrogen storage. Moreover, the two-stage reaction for $NaAlH_4$ is undesirable in actual use; one-stage reaction is only practical. Attempts have been made so far to lower the hydrogen release temperature with the help of a catalyst; however, the object is not achieved yet.

The present invention was completed to address the above-mentioned problem. It is an object of the present invention to provide a hydrogen occluding material which occludes much more hydrogen than conventional alkali metal hydride (such as $NaAlH_4$) through reversible reactions and yet permits hydrogen occlusion and release in one stage at a lower operating temperature. It is another object of the present invention to provide a method for using said hydrogen occluding material.

Disclosure of the Invention

The present invention is directed to a hydrogen occluding material which comprises an aluminum hydride represented by the formula (1) below.

$$AlH_x \qquad (1)$$

(where $0 \leq x \leq 3$.)

The present invention is directed also to a method for using a hydrogen occluding material, said method comprising hydrogenating and/or dehydrogenating at 200°C or below a hydrogen occluding material composed of an aluminum hydride represented by the formula (1) below.

$$AlH_x \qquad (1)$$

(where $0 \leq x \leq 3$.)

The present inventors studied the possibility of using $NaAlH_4$ as a hydrogen occluding material by causing it to support a catalyst. In the course of their study, the present inventors theorized as follows the mechanism by which $NaAlH_4$ decomposes on the catalyst.

$$3[(NaH)(AlH_3)] \rightarrow 3(NaH)(AlH_3) + 2AlH_3 \qquad (4)$$

$$3(NaH)(AlH_3) \rightarrow 3NaH + AlH_3 \qquad (5)$$

$$NaAlH_4 \rightarrow NaH + AlH_3 \qquad (6)$$

$$AlH_3 + catalyst \rightarrow Al + 3/2H_2 \qquad (7)$$

The formulas (4) to (7) above represent the ordinary process of decomposition of $NaAlH_4$. In other words, they show that $AlH_3$ migrates through the $NaAlH_4$ compound until it comes into contact with the catalyst which is present near the surface, and then it decomposes into metallic aluminum and hydrogen, as represented by the formula (7).

With the foregoing in mind, the present inventors studied the possibility of isolating $AlH_3$ alone and using it as a new hydrogen occluding material. Assuming that $AlH_3$ has a simple structure and decomposes in one stage, it would release as much hydrogen as 10.0 wt% theoretically.

According to the present invention, the hydrogen occluding material is the aluminum hydride represented by the formula (1) above, which is capable of occluding and/or releasing hydrogen in one stage at a low temperature.

Based on their unique insight, the present inventors carried out extensive researches and experiments to prove the usefulness of the above-mentioned aluminum hydride as a hydrogen occluding material. It was found that the aluminum hydride permits a large amount of hydrogenation and/or dehydrogenation in one stage at a low temperature. This finding led to the present invention.

Brief Description of the Drawings

Fig. 1 is a graph showing the amount of hydrogen released from $AlH_3$ (as a hydrogen occluding material according to the present invention) and $NaAlH_4$ (for comparison).

Fig. 2 is an X-ray diffraction pattern of $AlH_3$ powder.

Fig. 3 is a graph showing that $AlH_3$ changes in the amount of hydrogen release upon mechanical crushing by a ball mill.

Fig. 4 is a graph showing that $AlH_3$ changes in the amount of hydrogen release upon incorporation with titanium as a catalyst.

Fig. 5 is a graph showing how $AlH_3$ varies in the amount of hydrogen release depending on whether mechanical mixing is performed under the atmosphere of $H_2$ or Ar (both at 100 atm).

Fig. 6 is a schematic sectional view showing the electrochemical device (or fuel cell) provided with the hydrogen occluding composite material according to the present invention.

Best Mode for Carrying out the Invention

The invention will be described in more detail with reference to the following examples.

The hydrogen occluding material according to the present invention is one which is capable of hydrogenation and/or dehydrogenation at 200°C or below. To be concrete, it occludes and releases hydrogen gas (in the form of either molecules or atoms) at a properly controlled pressure and temperature.

Moreover, the hydrogen occluding material according to the present invention is an aluminum hydride mentioned above; however, it may contain a dopant which functions as a catalyst.

The dopant promotes the reversible hydrogenation and/or dehydrogenation at a lower temperature.

The hydrogen occluding composite material according to the present invention, which is composed of the aluminum hydride and the dopant, should preferably be produced by mixing the aluminum hydride with the doping substance. Mixing may be easily accomplished by mechanical stirring.

The dopant may be at least one species selected from transition metals belonging to groups III to V of the periodic table, chromium, iron, nickel, and alkali metals, The transition metals include Sc, Y, Ti, Zr, Hf, V, Nb, and Ta, and the alkali metals include Li, Na, K, Rb, and Cs. These metals may also be used in the form of alloys. In a preferred embodiment, these metals may be used in the form of alcoholate, halide, hydride, organometallic compound, or intermetallic compound. They may be used in combination with one another.

The dopant should be used in an amount of 0.2 to 10 mol%, preferably 1 to 5 mol%, based on the aluminum hydride mentioned above. In the case where the transition metal is in the highly oxidized state, it is possible to reduce it to the low oxidized state (with a low valence) by the aluminum hydride which is present in an excess amount during doping process.

Moreover, the hydrogen occluding material according to the present invention should preferably be used in the form of fine powder, so that it is capable of hydrogenation and/or dehydrogenation at a lower temperature. The desired fine powder can be obtained by mechanical stirring.

Incidentally, the aluminum hydride mentioned above may be used as such or in the form of fine powder with doping. Either will do.

The aluminum hydride according to the present invention may be prepared by chemical synthesis. Several methods for chemical synthesis have been proposed, and they have very little effect on hydrogen release.

The hydrogen occluding material according to the present invention is suitable for a variety of electrochemical devices. Such an electrochemical device may be composed of a first electrode, a second electrode, and a proton ($H^+$) conductor held between the two electrodes. The first electrode is supplied with hydrogen, and the second electrode is supplied with oxygen. The hydrogen occluding material according to the present invention is used for the hydrogen gas supply unit connected to the first electrode. The electrochemical device constructed in this manner exhibits good output characteristics because of efficient hydrogen gas supply.

The proton conductor includes Nafion and fullerene derivatives (such as fullerenol which is fullerene polyhydroxide). The proton conductor based on fullerene derivatives is disclosed in WO01/06519.

The fullerene derivative as the proton conductor may be used alone or in combination with a binder.

The present invention is embodied in an electrochemical device as a fuel cell in which the hydrogen occluding material according to the present invention is used for the hydrogen supply unit and the fullerene derivative is singly used as the proton conductor. The proton conductor in this case is a film formed by pressing from the fullerene derivative.

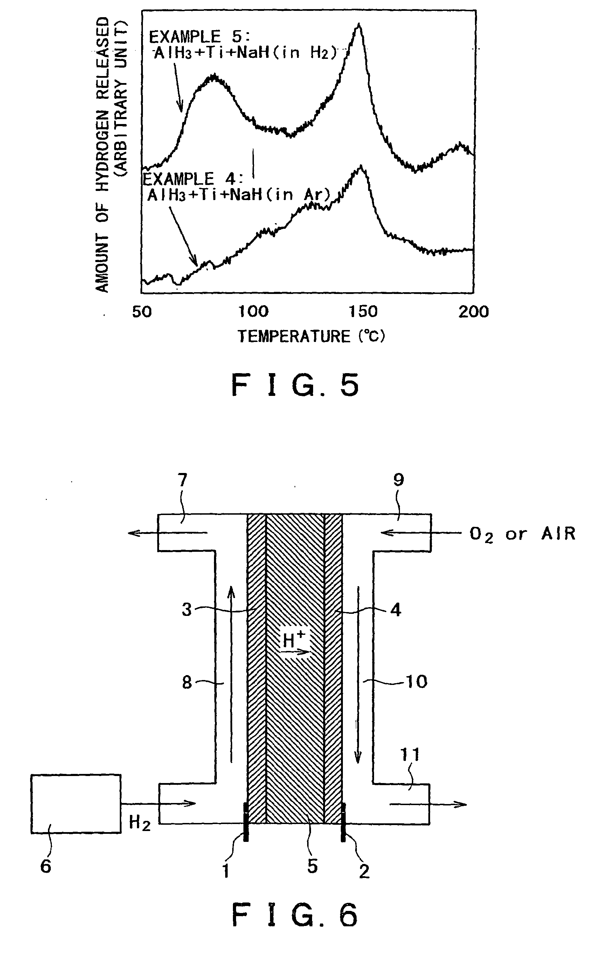

Fig. 6 shows the construction of the electrochemical device as a fuel cell. This fuel cell is made up of a negative electrode 3 (fuel electrode or hydrogen electrode), a positive electrode 4 (oxygen electrode), and a proton conductor 5 held between these two electrodes. The negative and positive electrodes have terminals 1 and 2, respectively. At the time of operation, the negative electrode 3 is supplied with hydrogen from the hydrogen gas supply unit 6, and hydrogen is discharged from the outlet 7 (which may be omitted). While passing through the channel 8, the fuel ($H_2$) generates protons which migrate, together with protons evolved from the proton conductor, toward the positive electrode 4. These protons react with oxygen (air) which enters the channel 10 from the inlet 9 and flows toward the outlet 10. This reaction generates an electromotive force as desired.

The fuel cell mentioned above exhibits good output characteristics because of efficient hydrogen supply attributable to the hydrogen occluding material according to the present invention.

Moreover, the fuel cell is characterized by a high hydrogen ion conductivity because dissociation of hydrogen ions takes place in the negative electrode 3 and further dissociation of hydrogen ions takes place in the proton conductor while hydrogen ions supplied from the negative electrode 3 are migrating toward the positive electrode 4. The high hydrogen ion conductivity eliminates the humidifier which is necessary when Nafion is used as the proton conductor. This permits the system to be simplified and lightened and helps the electrode to improve in current density and output characteristics.

Incidentally, the fuel cell mentioned above may be modified such that the proton conductor, which is the fullerene derivative in the form of press-formed film held between the first and second electrodes, is replaced by a fullerene derivative bonded with a binder. The proton conductor containing a binder has sufficient strength.

The binder may be selected from any known polymeric materials capable of forming a film, such as polyfluoroethylene, polyvinylidene fluoride, and polyvinyl alcohol. They may be used alone or in combination. The amount of the binder should be no more than 20 wt% of the proton conductor. The binder in an excess amount will lower the conductivity of hydrogen ions.

The proton conductor containing a binder also exhibits good hydrogen ion conductivity like the proton conductor consisting essentially of fullerene derivative because it contains the fullerene derivative mentioned above as the proton conductor.

Unlike the one consisting solely of the fullerene derivative, it can be made into film (owing to the polymeric material incorporated therein) and is stronger than the product molded by compression from a powder of fullerene derivative. Therefore, it can be used as a flexible ion conducting thin film (300 μm or less in thickness) capable of blocking gas permeation.

A thin film of proton conductor composed of the above-mentioned fullerene derivative and binder can be produced by any known method such as pressure molding and extrusion molding.

In the above-mentioned electrochemical device, the proton derivative is not specifically restricted. Any material can be used so long as it is capable of conducting hydrogen ions. It includes, for example, fullerene derivatives (such as hydrated fullerene and fullerenol sulfate ester) and Nafion.

EXAMPLES

The invention will be described in more detail with reference to the following examples, which are not intended to restrict the scope thereof.

All experiments in the examples were carried out under a specific atmosphere (for example, argon atmosphere). Chemicals used in experiments were of reagent grade.

Comparative Example 1

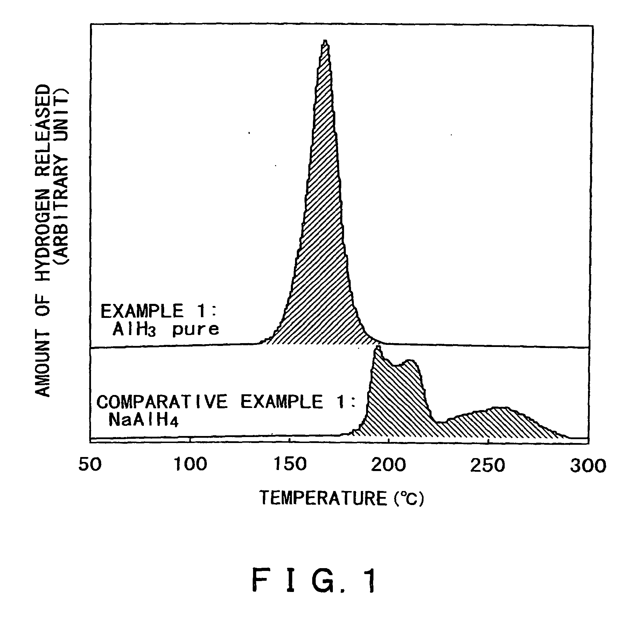

Test for hydrogen release was conducted to observe the behavior of $NaAlH_4$ used alone. ($NaAlH_4$ is a product of 90% purity, from Aldrich.) Hydrogen release was expressed in terms of pressure change versus temperature at normal pressure. The sample was heated from room temperature to 300°C at a rate of 2°C/min, and the amount of hydrogen released during heating was measured. The results of measurement are shown in Fig. 1, together with the results of measurement in Examples.

Example 1

$AlH_3$ as the aluminum hydride mentioned above was synthesized according to the formula (8) below.

$$LiAlH_4 + AlCl_3 \rightarrow AlH_3\downarrow + LiCl\downarrow \qquad (8)$$

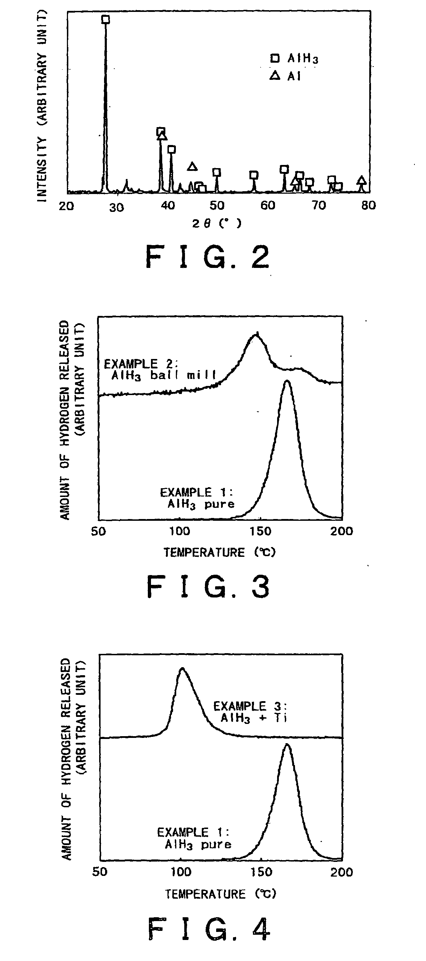

After the reaction was completed, the resulting sample was tested by powder X-ray diffractometry. A diffraction pattern as shown in Fig. 2 was obtained, which suggests high-purity $AlH_3$ (JCPDS file, #23-0761).

The thus obtained $AlH_3$ was tested for hydrogen release by observing the pressure change versus temperature at normal pressure. The sample was heated from room temperature to 200°C at a rate of 2°C/min. The amount of hydrogen released during heating was measured. The results are shown in Fig. 1.

It is apparent from Fig. 1 that $AlH_3$, which is the hydrogen occluding material according to the present invention, releases hydrogen at a lower temperature than $NaAlH_4$. It is also apparent that $AlH_3$ releases hydrogen in one stage, whereas $NaAlH_4$ releases hydrogen (due to thermal dissociation) in two stages. The hatched area in Fig. 1 corresponds to the amount of hydrogen released. Therefore, it is apparent that $AlH_3$ releases more hydrogen than $NaAlH_4$. The amount of hydrogen released from $AlH_3$ is 9 wt%, which is close to the theoretical value.

Example 2

The sample of $AlH_3$ obtained in Example 1 was mechanically pulverized by using a three-dimensional ball mill ("TKMAC-1200" from Topologic Systems), which was run at 400 rpm for 10 minutes. The atmosphere in the ball mill was argon. The resulting fine powder of $AlH_3$ was tested for hydrogen release in the same way as in Example 1. The results are shown in Fig. 3.

It is apparent from Fig. 3 that the sample of $AlH_3$ which has been pulverized by ball milling releases hydrogen at a lower temperature than the sample of $AlH_3$ remaining intact. It is considered that another unsharp peak that appears at about 170°C is due to $AlH_3$ partly remaining uncrushed.

Example 3

The sample of $AlH_3$ obtained in Example 1 was doped with titanium (Ti), and the resulting composite material was used as the hydrogen occluding material according to the present invention. The source of titanium as the dopant was $TiCl_3$. Doping was accomplished by mixing the two components (in powder form) in an agate mortar for about 5 minutes.

The resulting sample was tested for hydrogen release in the same way as in Example 1. The results are shown in Fig. 4.

It is apparent from Fig. 4 that the composite material of $AlH_3$ + Ti, as the hydrogen occluding material according to the present invention, releases hydrogen at a lower temperature than the sample of $AlH_3$ in Example 1. A probable reason for this is that Ti (as a catalyst) exists on the surface of $AlH_3$ so as to promote decomposition into hydrogen.

Example 4

This example is intended to achieve the effect of lowering the hydrogen release temperature of $AlH_3$ by combination of doping (as in Example 2) and ball-milling (as in Example 3).

A sample of the hydrogen occluding material was prepared by mixing $AlH_3$ with $TiCl_3$ and NaH in a three-dimensional ball mill in place of an agate mortar. The atmosphere in the ball mill was argon. The resulting sample was tested for hydrogen release in the same way as in Example 1. The results are shown in Fig. 5.

It is apparent from Fig. 5 that there is a peak in the neighborhood of 100°C. This peak is identical with that attributable to Ti-doped $AlH_3$. There is also a peak in the neighborhood of 150°C. This peak coincides with that resulting from ball-milling. This is a peak in the neighborhood of 200°C. This peak is attributable to NaH. Incidentally, there are no sharp peaks below 100°C. It is concluded that the combination of doping and pulverizing does not produce the effect of lowering the hydrogen release temperature.

Example 5

Since the combination of doping and pulverizing in Example 4 did not produce the desired effect, the sample obtained in Example 4 was further mixed in the ball mill, with the atmosphere therein replaced by hydrogen at 100 atm. The resulting composite material was tested for hydrogen release in the same way as in Example 1. The results are shown in Fig. 5.

It is noted in Fig. 5 that there is a peak (which does not appear in Example 4) in the neighborhood of 85°C. This peak seems to have appeared in the following sequence. $AlH_3$ releases hydrogen gas while it is being pulverized in the ball mill. This hydrogen gas is occluded again by $AlH_3$ under a high-pressure atmosphere of hydrogen (100 atm) in the ball mill. Then, the hydrogen gas is released at a lower temperature owing to the combined effect of Ti doping and pulverizing. It was shown that the hydrogen occluding material in this example releases hydrogen gas and then occludes it again under a high pressure of hydrogen (100 atm) in the ball mill.

The foregoing description is a preferred embodiment of the invention and various changes and modifications may be made in the invention without departing from the spirit and scope thereof.

For example, the aluminum hydride is not necessarily limited to $AlH_3$ mentioned above; however, it may be selected from any compounds represented by the formula (1).

Making a composite material from the aluminum hydride (as the main component) and the dopant may be achieved by mixing, and there will be several possible ways for mixing.

The dopant is not limited to titanium (Ti) and NaH mentioned above; any dopant will be properly used.

Exploitation in Industry

The hydrogen occluding material according to the present invention, which is based on the aluminum hydride represented by the formula (1) above, is capable of occluding and/or releasing hydrogen at a low temperature in one stage. Therefore, it will find use as a practical hydrogen occluding material with a light weight and a high capacity.

**Claims**

1. A hydrogen occluding material which comprises an aluminum hydride represented by the formula (1) below.

$$AlH_x \qquad (1)$$

(where $0 \leq x \leq 3$.)

2. The hydrogen occluding material as defined in Claim 1, which is capable of hydrogenation and/or dehydrogenation at 200°C or below.

3. The hydrogen occluding material as defined in Claim 1, which occludes and releases hydrogen gas (in the form of hydrogen molecules or hydrogen atoms) under adequate control of pressure and/or temperature.

4. The hydrogen occluding material as defined in Claim 1, which contains a dopant functioning as a catalyst.

5. The hydrogen occluding material as defined in Claim 4, wherein the dopant is at least one species selected from transition metals belonging to groups III to V of the periodic table, chromium, iron, nickel, and alkali metals, and compounds thereof.

6. The hydrogen occluding material as defined in Claim 4, wherein the amount of the dopant is 0.2 to 10 mol% of the amount of the aluminum hydride.

7. The hydrogen occluding material as defined in Claim 1 or 4, which is in the form of fine powder.

8. A method for using a hydrogen occluding material, said method comprising hydrogenating and/or dehydrogenating at 200°C or below a hydrogen occluding material composed of an aluminum hydride represented by the formula (1) below.

$$AlH_x \qquad (1)$$

(where $0 \leq x \leq 3$.)

9. The method for using a hydrogen occluding material as defined in Claim 8, which causes hydrogen gas (in the form of hydrogen molecules or hydrogen atoms) to be occluded and released under adequate control of pressure and/or temperature.

10. The method for using a hydrogen occluding material as defined in Claim 8, wherein the hydrogen occluding material contains a dopant functioning as a catalyst.

11. The method for using a hydrogen occluding material as defined in Claim 10, wherein the hydrogen occluding material contains a dopant which is at least one species selected from transition metals belonging to groups III to V of the periodic table, chromium, iron, nickel, and alkali metals, and compounds thereof.

12. The method for using a hydrogen occluding material as defined in Claim 10, wherein the hydrogen occluding material contains the dopant in an amount of 0.2 to 10 mol% of the amount of the aluminum hydride.

13. The method for using a hydrogen occluding material as defined in Claim 8 or 10, wherein the hydrogen occluding material is in the form of fine powder.

F I G. 1

EP 1 514 840 A1

FIG. 2

FIG. 3

FIG. 4

F I G. 5

F I G. 6

## INTERNATIONAL SEARCH REPORT

| International application No. |
| --- |
| PCT/JP03/07670 |

| A. CLASSIFICATION OF SUBJECT MATTER |
| --- |
| Int.Cl$^7$ C01B6/06, C01B3/04 |
| |
| According to International Patent Classification (IPC) or to both national classification and IPC |

| B. FIELDS SEARCHED |
| --- |
| Minimum documentation searched (classification system followed by classification symbols) |
| Int.Cl$^7$ C01B6/06, C01B3/04, C01B6/00, C01B3/00, B01J20/02 |
| |
| Documentation searched other than minimum documentation to the extent that such documents are included in the fields searched |
| Jitsuyo Shinan Koho     1922–1996    Jitsuyo Shinan Toroku Koho    1996–2003 |
| Kokai Jitsuyo Shinan Koho   1971–2003    Toroku Jitsuyo Shinan Koho    1994–2003 |
| Electronic data base consulted during the international search (name of data base and, where practicable, search terms used) |
| CA (STN) |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | WO 00/76913 A1 (SRI INTERNATIONAL),<br>21 December, 2000 (21.12.00),<br>Full text<br>& US 6228388 B1 | 1-3,8,9.<br>4-7,10-13 |
| X<br>Y | WO 01/68517 A1 (HYDRO-QUEBEC),<br>20 September, 2001 (20.09.01),<br>Full text<br>& AU 3527401 A | 1-3,7-9,13<br>4-6,10-12 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 July, 2003 (30.07.03) | 12 August, 2003 (12.08.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| | International application No. |
|---|---|
| | PCT/JP03/07670 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 00/7930 A1 (UNIVERSITY OF HAWAII), 17 February, 2000 (17.02.00), Claims & JP 2002-52209 A Claims & EP 1100745 A1 & US 2001/051130 A1 & CA 2339656 A & AU 4997299 A & CN 1318033 T | 4-7,10-13 |
| Y | WO 00/20329 A1 (McGILL UNIVERSITY), 13 April, 2000 (13.04.00), Claims & JP 2002-526255 A Claims & EP 1124754 A1 & US 2001/18939 A1 & CA 2345956 A & AU 9425598 A | 4-7,10-13 |
| X<br>Y | K. WAKAMORI et al., Compression curve of aluminium hydride, Journal of Materials Science Letters, 1985, Vol.4, No.4, pages 490 to 492 | 1-3,8,9<br>4-7,10-13 |

Form PCT/ISA/210 (continuation of second sheet) (July 1998)